# EUROPÄISCHE PATENTSCHRIFT

(11) **EP 2 363 272 B1**
(45) Veröffentlichungstag und Bekanntmachung des Hinweises auf die Patenterteilung: **10.08.2016**
(21) Anmeldenummer: 11001771.2
(22) Anmeldetag: 03.03.2011
(51) Int. Cl.: B60B 5/02, B29C 70/22, B29C 70/38, B29L 31/32, B29C 70/40, B29C 70/48

(54) **VERFAHREN ZUR HERSTELLUNG VON RADFELGEN AUS FASERVERBUNDWERKSTOFFEN**
METHOD FOR PRODUCING WHEEL RIMS MADE OF FIBRE COMPOUND MATERIALS
PROCÉDÉ DE FABRICATION DE JANTES EN MATIÈRES COMPOSITES FIBREUSES

(30) Priorität: 05.03.2010 DE 102010010513
(43) Veröffentlichungstag der Anmeldung: 07.09.2011
(60) Teilanmeldung: 15001167.4
(73) Patentinhaber: ThyssenKrupp Carbon Components GmbH, 01723 Wilsdruff STT Kesselsdorf (DE)
(72) Erfinder: Hufenbach, Werner, Prof. Dr. Ing.-habil, 01324 Dresden (DE); Lepper, Martin, Dr.-Ing., 01279 Dresden (DE); Werner, Jens, Dipl.-Ing., 01640 Coswig (DE); Köhler, Christian, Dipl.-Ing., 01099 Dresden (DE)

(56) Entgegenhaltungen:
- EP-A2- 0 307 112
- DE-A1- 2 411 429
- DE-A1-102004 017 311
- DE-A1-102006 051 867
- US-A- 3 917 352
- US-A1- 2005 042 109
- MATHIAS SIEGRIST: 'Wirtschaftliche RTM-Prozesstechnologien für die Herstellung von CFK-Motorradfelgen' ETH, [Online] 30 Dezember 2006, XP055080474 DOI: 10.3929/ETHZ-A-005177590 Gefunden im Internet: <URL:http://e-collection.library.ethz.ch/es erv/eth:28637/eth-28637-01.pdf> [gefunden am 2013-09-23]

## Beschreibung

Verfahren zur Herstellung von Radfelgen aus Faserverbundwerkstoffen, insbesondere zum Einsatz in der Kraftfahrzeugtechnik, bei dem eine Preform der Radfelge durch Ablage eines Fasermaterials auf einem die Kontur des Felgenbettes abbildenden Formwerkzeug gebildet und die Preform anschließend konsolidiert wird.

Bekannt ist, dass die Fertigung von hohlprofilartigen Bauteilen, insbesondere von Rädern beziehungsweise Radfelgen, aus Faserverbundwerkstoffen überwiegend durch manuelle Handhabungen von vorgefertigten Prepregs, Fasergeflechten, Multiaxialgelegen oder anderen Faserhalbzeugen erfolgt. Hierbei werden die Faserhalbzeuge manuell oder teilweise manuell an das Formwerkzeug des Bauteils, speziell an das Formwerkzeug der Radfelge, angeformt und zu einer Preform gebildet, welche anschließend - zur Fertigstellung des Bauteils - durch Konsolidierung (Wärmebehandlung und /oder durch Imprägnierung mit·Zusatzstoffen) verfestigt wird. Die Preform ist ein der Bauteilgeometrie entsprechend geformtes Fasergebilde vor der Konsolidierung.

Nachteilig ist, dass derartige Verfahren hinsichtlich Wirtschaftlichkeit und Qualitätssicherung für Großserienfertigungen nicht akzeptabel sind. Aus der Marktsituation ergibt sich jedoch die Notwendigkeit zur industriellen Fertigung der Bauteile aus textilen Preformen.

Aus der Druckschrift DE 196 25 797 B4 ist ein Verfahren zur Herstellung eines Rades aus faserverstärktem Kunststoff bekannt geworden, bei dem ein aus einem Fasermaterial hergestellter textiler Schlauch, in dem das Fasermaterial flächig ungleichmäßig verteilt ist, unter Veränderung der flächigen Verteilung des Fasermaterials zu dem Rad verformt und anschließend konsolidiert wird. Das Rad ist dabei komplett aus dem textilen Schlauch geformt.

Nachteilig an dieser Lösung ist, dass sich die Faserlage in Abhängigkeit des Durchmessers und der Form der Radfelge einstellt und nicht beeinflussbar ist. Die Winkelstellung der Fasern beeinflusst die Belastbarkeit der Nabe jedoch entscheidend.

Außerdem ist von Nachteil, dass die Umformung des Schlauches in die Form der Radfelge vollständig im Konsolidierungswerkzeug geschieht, was zeitaufwändig und technologisch umständlich ausführbar ist.

Eine weitere Lösung offenbart die Druckschrift DE 10 2005 041 940 A1. Die beschriebene Radfelge aus Faserverbundwerkstoff ist einteilig aus einem Geflechtschlauch hergestellt, wobei der Geflechtschlauch über Stützkerne oder zueinander fixierte Ringe, die die Form der Radfelge ergeben, gezogen und fixiert wird, anschließend der vorfixierte Schlauch in ein Werkzeug zur Konsolidierung eingebracht und mit einem Matrixmaterial infiltriert wird. Damit werden mit einem einzigen Geflechtschlauch sowohl die Radnabe als auch das Felgenbett mit den Felgenhörnern ausgebildet.

Nachteilig ist auch hier, dass der Faserverlauf des Flechtschlauches bei der Formgebung nicht beeinflussbar ist und dadurch der Belastbarkeit der Radfelge Grenzen gesetzt sind.

Außerdem ist dadurch, dass fertigungsbedingt sowohl die Radnabe als auch das Felgenbett aus dem gleichen Material hergestellt sind, beispielsweise aus einem Kohlefasergeflecht, eine derart gefertigte Radfelge für bestimmte Einsatzfälle ungeeignet. Soll die Radnabe z. B. mit einer Bremsscheibe in Wirkverbindung stehen, die beim Bremsbetrieb des Rades Wärme erzeugt, kann die aus dem schlecht wärmeleitenden Kohlefasergeflecht bestehende Radnabe diese Wärme nicht im genügenden Maße ableiten.

Aus der Druckschrift US 2005/0042109 A1 ist ein aus Faserverbundmaterial gefertigter Holm für ein Rotorblatt und ein Verfahren zur Herstellung des Holms bekannt. Das Verfahren beschreibt die Umflechtung eines stabförmigen Flechtdorns mit Fasermaterial zur Vorfertigung des Holmes. Die geflochtene Preform des Holms muss in einem zusätzlichen Umformvorgang in die endgültige Form zur Verwendung im Rotorblatt gebracht werden. Der Flechtprozess ermöglicht eine maschinelle Einflechtung von 0°-Fasern parallel zur Längsachse des Holmes, die die ballistische Toleranz des Holms verbessern. Die maschinelle Herstellung einer differenzierten, belastungsangepassten Faserstruktur auf einem unstetig konturierten Formwerkzeug, entsprechend der an eine Radfelge gestellten Anforderungen, wird hiermit nicht erreicht.

Aus der nicht patentschriftlichen Literatur ist das Dokument von Matthias Siegrist, "Wirtschaftliche RTM-Prozesstechnologien für die Herstellung von CFK-Motorradfelgen" URL: http://e-collection.library.ethz.ch/eserv/eth:28637/eth-28637-01.pdf bekannt, in welchem die Möglichkeit des Umflechtens eines Kerns einer Radfelge in Richtung der Radachse mittels einer Radialumflechtmaschine konzeptionell beschrieben wird. Der praktischen Umsetzung des Konzepts stehen die beschriebenen Schwierigkeiten hinsichtlich der Ausbildung des Geflechts im Wendebereich, an starken Krümmungen und steilen Flanken, wie den Felgenhörnern, entgegen. Es werden Probleme des Verrutschens des Fasergeflechts auf dem Kern und des Abhebens des Fasergeflechts vom Kern in kritischen Rand- und Übergangsbereichen des Kerns der Radfelge erwartet, für die keine Lösungen aufgezeigt werden.

Es ist daher Aufgabe der Erfindung, ein Verfahren zur Herstellung von Radfelgen, der eingangs genannten Art so weiterzubilden, dass die Radfelge mit der erforderlichen Gestaltungsvariabilität in Größe, Form und Materialeinsatz und mit geringem technologischem Aufwand maschinell hergestellt werden kann. Insbesondere soll das Verfahren die maschinelle Herstellung einer belastungsangepassten Faserstruktur in kritischen Bereichen der Radfelge gewährleisten.

Erfindungsgemäß wird die Aufgabe durch ein Verfahren gemäß dem Patentanspruch 1 gelöst. Es ist danach vorgesehen, dass die Preform der Radfelge mittels maschineller Umflechtung gebildet wird, bei der das Formwerkzeug als Flechtkern dient und gemeinsam mit dem Flechtkern wenigstens ein Bauelement der Radfelge derart mit Flechtfäden umflochten wird, dass ein Fasergeflecht entsteht, welches formschlüssig am Formwerkzeug und an einer umlaufenden Kontur des Bauelements anliegt.

Bei diesem erfindungsgemäßen Verfahren entsteht das Fasergeflecht mittels maschineller Umflechtung unmittelbar auf dem Formwerkzeug zur Formung einer Preform einer Radfelge und wird gleichzeitig an das Formwerkzeug und damit an die Felgenbettkontur angeformt. Das Formwerkzeug der Radfelge ist erfindungsgemäß als Flechtkern in dem Umflechtungsvorgang eingesetzt. Es hat sich herausgestellt, dass durch das Verflechten der Fäden direkt auf dem Formwerkzeug der Radfelge gegenüber den herkömmlichen Verfahren ein sehr gutes Anlegen der Fasern an die Konturenübergänge und damit eine wesentlich bessere Ablagequalität der Faserverstärkung, insbesondere im Bereich der Konturunstetigkeiten des Felgenbettes (wie zum Beispiel beim Übergang ins Tiefbett) erzielt werden. Der Zusammenhalt der infolge des Flechtprozesses verflochtenen Flechtfäden verhindert ein Verrutschen der Lage der abgelegten Faserfäden, insbesondere von den konvexen Konturen des Formwerkzeuges, die beispielsweise das Felgenhorn oder den Übergang ins Tiefbett abbilden. In Wechselwirkung mit der Fadenspannung beim Flechten wird auch ein Anlegen des Geflechts an konkave Konturen des Formwerkzeuges erreicht.

Die formgerechte Preform kann somit mittels der Umflechttechnik in einem einzigen Verfahrensschritt maschinell angefertigt werden. Der bisherige separate, meist manuelle Fertigungsschritt der Anformung eines aufgelegten Fasergeleges an das Formwerkzeug entfällt gänzlich.

Die maschinelle Umflechtung des Formwerkzeuges ermöglicht zudem mit einem gesteuerten Flechtprozess die Strukturen des unmittelbar auf dem Formwerkzeug abgelegten Fasergeflechts individuell zu gestalten und somit Preformen (und folglich Radfelgen) mit örtlich differenzierter Beschaffenheit zu erzeugen. So kann beispielsweise die Wandstärke einer Radfelge in Anpassung an die in unterschiedlicher Intensität und Verteilung wirkenden mechanischen oder thermischen Belastungen lokal variiert werden.

Durch die gemeinsame Umflechtung des Flechtkerns mit einem Bauelement der Radfelge wird ein Gefüge aus Formwerkzeug bzw. Flechtkern und einem oder mehreren Bauelementen und Flechtfäden geschaffen. Während des Umflechtprozesses wird ein formschlüssiger Anschluss des gebildeten Fasergeflechts an das Bauelement erzielt, der genügt, um diese mehrteilige Preform zu fixieren und als eigenständiges Zwischenprodukt für nachfolgende Fertigungsschritte bereitzustellen. Das Bauelement begleitet dabei eine Doppelfunktion sowohl als ein verlorener Teil des Formwerkzeuges bzw. des Flechtkernes als auch als Teil der Preform. Der Formschluss des Fasergeflechts mit dem eingeflochtenen Bauelement fixiert die mehrteilige Preform in sich und verhindert zugleich ein Verrutschen der Preform auf dem Formwerkzeug.

Damit entfällt neben der manuellen Anformung des Fasergeflechts an das Formwerkzeug auch ein weiterer manueller Fertigungsschritt des Verbindens der Preform der Radfelge aus Fasergeflecht bzw. der Radfelge aus Faserverbundmaterial mit anderen Bauelementen der Radfelge. Damit eignet sich das erfindungegemäße Verfahren für eine industrielle Großserienfertigung von mehrteiligen Radfelgen aus Faserverbundwerkstoff.

Diese Ausführungsform des Verfahrens ermöglicht außerdem einzelne Bauelemente verschiedener Gestalt, (Faser-)Struktur und Material während des Umflechtprozesses maschinell zu einer Einheit zu verbinden, als Fertigungsvorstufe für eine, dem jeweiligen Einsatzfall entsprechend, individuell gestaltete Radfelge. Dieser Vorzug der individuellen Gestaltung ist insbesondere bei der Fertigung von Radfelgen von Bedeutung. Neben der Herstellung von aus verschiedenen Faserverbundwerkstoffen bestehenden mehrteiligen Radfelgen erlaubt das erfindungsgemäße Verfahren auch die Herstellung von aus verschiedenen Materialien bestehenden Hybrid-Radfelgen.

In einer vorteilhaften Ausführungsform dieses Verfahrens wird gemeinsam mit dem Flechtkern eine Radscheibe umflochten. Gegenüber dem Felgenbett sind an eine Radscheibe wesentlich andere Anforderungen gestellt. Durch den erfindungsgemäßen Flechtprozess können auch Bauelemente mit sehr differenzierter Beschaffenheit, wie es bei der Radscheibe und dem Felgenbett der Fall ist, mit einfachen Mitteln und mit geringem fertigungstechnischem Aufwand zuverlässig zusammengefügt werden.

In einer weiteren vorteilhafte Ausführungsform dieses Verfahrens werden Fixierungselemente in das Fasergeflecht eingeflochten, mittels derer die Lage des Fasergeflechtes auf dem Formwerkzeug bzw. auf dem Flechtkern und dem umflochtenen Bauelement fixiert wird. Die eingeflochtenen Fixierungselemente bewirken neben einer bündigen, formschlüssigen Auflage des Fasergeflechts mit verbessertem, sicherem Sitz auf dem Formwerkzeug bzw. auf dem Flechtkern und dem Bauelement eine örtliche Struktur- und Wandverstärkung des Fasergeflechts, die vornehmlich in den belastungserheblichen Bereichen für eine verbesserte Stabilität der Radfelge sorgt.

Die Fixierungselemente werden nach einer vorteilhaften Ausführungsform der erfindungsgemäßen Verfahren vorzugsweise im Bereich einer Wendezone und/oder im Bereich eines Überganges des Umfangs des Flechtkerns und/oder im Bereich des/der von dem Bauelement gebildeten Überstandes oder Vertiefung in das Fasergeflecht eingeflochten. Das sorgt besonders in den kritischen Bereichen der Konturenübergänge des Flechtkerns bzw. des umflochtenen Bauelements für eine bündige, formschlüssige Auflage sowie eine Struktur- und Randverstärkung des Fasergeflechts. Eine Wendezone des Fasergeflechtes wird durch den Richtungswechsel der Flechtrichtung ausgebildet, und bildet die äußere Begrenzung der Preform bzw. der Radfelge. Die in der Wendezone eingeflochten Fixierungselemente dienen der Stabilisierung des Randes der Preform bzw. der Radfelge.

In einer weiteren vorteilhaften Ausführungsform des Verfahrens wird während der Konsolidierung der Preform ein am Bauelement anliegender Abschnitt des Fassergeflechtes mit dem Bauelement stoffschlüssig verbunden. In einem einzigen Fertigungsschritt wird gleichzeitig mit der erforderlichen Konsolidierung der Preform unmittelbar die für die Stabilität der Radfelge erforderliche unlösbare Verbindung des Fasergeflechts mit dem Bauelement realisiert. Die Konsolidierung der Preform kann beispielsweise durch kurzzeitiges Aufschmelzen des Fasergeflechtes und Verharzen erfolgen, wobei gleichzeitig die stoffschlüssige Verbindung mit dem Bauelement hergestellt wird. Hieraus ergeben sich erhebliche fertigungstechnische Einsparungen.

Im Interesse einer Leichtbauweise der Radfelge besteht das Bauelement aus Faserverbundwerkstoff. Der Einsatz von Faserverbundwerkstoff ermöglicht es außerdem, spezifische, an die mechanischen und thermischen Belastungen angepasste Verstärkungsstrukturen in der Radfelge vorzusehen. Das Bauelement kann beispielsweise ein bereits konsolidiertes Faserverbundteil mit einer von der im Umflechtungsprozess hergestellten Preform aus Faserverbundwerkstoff deutlich abweichenden Faserstruktur sein.

Alternativ können Bauelemente aus Metall im Umflechtungsprozess eingearbeitet werden, die der Radfelge eine besondere thermische Belastbarkeit und Festigkeit verleihen. Beide Werkstoffarten sind von besonderer vorteilhafter Bedeutung, je nach dem für welchen Zweck die Radfelgen vorgesehen sind.

Beispielsweise wird bei einer Radfelge mit einem zu erwartenden intensiven Bremsbetrieb eine Radscheibe aus Metall als Bauelement vorgesehen und erfindungsgemäß im Umflechtungsprozess mit dem Fasergeflecht des Felgenbett verbunden, so dass die beim Bremsen erzeugte Wärme gut von der Radscheibe abgeleitet werden kann. Bei dieser Hybrid-Radfelge in Kombination aus einem Felgenbett aus Faserverbundwerkstoff und einer Radscheibe aus Metall bleibt die Leichtbauweise weitestgehend erhalten.

Vorzugsweise ist das Bauelement ein vorkonfektionierter Preformling aus Fasermaterial, welche noch zu verschmelzen und/oder mit Fasermatrixmaterial zu versetzen ist. Diese Halbzeuge eignen sich besonders für die erfindungsgemäße Verbundtechnologie zur Herstellung der Radfelge aus mehrteiligen Preformen. Ist ein solcher Preformling als Bauelement vorgesehen, kann die Konsolidierung des Preformlings gemeinsam mit der Konsolidierung der gesamten Preform der Radfelge erfolgen, was zu weiteren fertigungstechnischen Einsparungen führt.

Die Variationsmöglichkeiten für die Herstellung der Preform erhöhen sich auch dadurch, dass der Flechtkern mehrteilig ausgebildet ist. Das Formwerkzeug kann aus Einzelteilen, vorzugsweise unter Beiordnung oder Einschluss diverser Bauelemente, zu individuellen Flechtkernen komplettiert werden, die anschließend von den Flechtfäden vollständig umwickelt und umflochten werden.

Vorzugsweise ist das Bauelement, wie die Radscheibe, zwischen zwei die Kontur des Felgenbettes der Radfelge abbildenden Teilkernen des Flechtkernes angeordnet. Bei dem erfindungsgemäßen Flechtprozess können Bauelemente mit differenzierter Beschaffenheit, wie die Radscheibe, unter Zwischenlage zwischen zwei Teilkernen mit einfachen Mitteln und mit geringem fertigungstechnischem Aufwand zuverlässig fixiert und mit dem Felgenbett zusammengefügt werden.

In einer besonders vorteilhaften Ausführungsform ist das Bauelement derart dimensioniert und dem Flechtkern beigeordnet, dass es im Verhältnis zum Umfang des Flechtkernes einen radialen, vorzugsweise umlaufenden Überstand über dem Flechtkern und/oder eine radiale, vorzugsweise umlaufende Vertiefung gegenüber dem Flechtkern bildet. Damit ergeben sich über den Umfang des Flechtkernes nach außen bzw. nach innen weisende Absätze, die eine unlösbare Hinterschnittverbindung mit vergrößerten Kontaktflächen zwischen Fasergeflecht und dem Bauelement ergeben. Dies verleiht der formschlüssigen Verbindung einen sicheren Halt und erhöht die Haftung zwischen dem Bauelement und dem Fasergeflecht, was sich besonders vorteilhaft auf die Beanspruchbarkeit der Gesamtstruktur der Preform bzw. der fertig gestellten Radfelge auswirkt.

Für die kostengünstige industrielle Fertigung der Radfelge, ist es besonders vorteilhaft, wenn die Umflechtung mittels einer üblichen Rundflechtmaschine erfolgt. Dabei wird das Formwerkzeug für die Herstellung der Preform als Flechtkern in der Rundflechtmaschine eingesetzt.

In einer bevorzugten Ausführungsform wird das Fasergeflecht durch eine stetig wiederkehrende Änderung der Flechtrichtung gebildet, vorzugsweise durch stetig wechselnde Seitwärtsbewegungen des Flechtkernes gegenüber dem Fadenlauf der Flechtfäden. Damit können durch einfache mechanische Mittel eine oder mehrere vernetzte Lagen der Flechtfäden auf den beweglichen Flechtkern und gegebenenfalls auf den oder die mitgeführten Bauelemente aufgebracht werden.

Die mit dem Richtungswechsel der Flechtrichtung gebildete Wendezone des Fasergeflechtes kann in beliebiger Anordnung ausgeführt sein. So kann in vorteilhafter Weise direkt beim Flechtprozess Einfluss auf die Gestaltung der äußeren Begrenzung der Preform bzw. der Radfelge und damit auf die Gestaltungs- und Qualitätsmerkmale der Radfelge genommen werden.

Bevorzugter Weise ist die Flechtdichte und/ oder der Flechtwinkel der Flechtfäden lokal einstellbar, denn dadurch können örtlich unterschiedliche Strukturen des Fasergeflechts und folglich örtlich verschiedene Wandstärken der Radfelge, erzeugt werden. Die Wandstärken können somit besonders differenziert an die örtlich verschiedenen mechanischen oder thermischen Belastungen der Radfelge angepasst werden.

Die mechanische Beanspruchbarkeit der Radfelge wird auch dadurch erhöht, dass in das Fasergeflecht Stehfäden integriert werden, die eine axiale Faserlage erzeugen. Diese Faserlage der Stehfäden entspricht gerade bei Radfelgen der Richtung eines zu erwartenden Kraftflusses und bewirkt eine Erhöhung der Belastbarkeit der Radfelge.

Des Weiteren ist eine Integration einer separaten Faserlage oder eines anderen textilen Halbzeuges in das Fasergeflecht sehr vorteilhaft, weil hierdurch belastungsgerecht örtlich unterschiedliche Strukturen des Fasergeflechts und damit vorteilhaft differenzierte Wandstärken der Radfelge erzeugt werden können.

Die Konsolidierung der Preform und/oder des Preformlings mittels einer Injektion, vorzugsweise mittels Harzinjektion intensiviert zugleich den strukturellen und den verbindenden Stoffschluss, was folglich die Wirtschaftlichkeit und die Qualität der Fertigung der Radfelge verbessert.

Eine besonders vorteilhafte Ausführungsform des Verfahrens ergibt sich dadurch, dass die Flechtfäden wenigstens teilweise aus Carbonfasern und/oder aus Glasfasern und/oder aus Metallfasern bestehen. Mit verschiedenen Flechtfäden aus unterschiedlichen Materialien können bedarfsgerecht angepasste Verstärkungsstrukturen erzielt werden.

Wird das Fasergeflecht durch eine teilweise uni-direktionale Ablage der Flechtfäden zueinander gebildet, entstehen besonders stabile Flechtstrukturen des Fasergeflechts.

Das erfindungsgemäße Verfahren soll nachfolgend anhand eines Ausführungsbeispieles näher erläutert werden. Die zugehörige Zeichnung zeigt dabei in
- Fig. 1: eine fragmentarische Seitenansicht einer Rundflechtmaschine mit einem geteilten Flechtkern und einem zwischenliegenden Preformling einer Radscheibe eine Radfelge,
- Fig. 2a: Detailansicht X des Flechtkernes nach Fig. 1 in einer ersten Variante des Anschlusses des Preformlings der Radscheibe,
- Fig. 2b: eine Detailansicht des Flechtkernes nach Fig. 1 in einer zweiten Variante des Anschlusses eines Preformlings,
- Fig. 2c: eine Detailansicht des Flechtkernes nach Fig. 1 in einer dritten Variante des Anschlusses eines Preformlings,
- Fig. 3: eine Detailansicht Y des Flechtkernes nach Fig. 1,
- Fig. 4: eine stilisierte Ansicht eines zweiteiligen Flechtkerns mit einem Preformling einer Radscheibe in einer ersten Herstellungsphase der Preform der Radfelge,
- Fig. 5: Ansicht des zweiteiligen Flechtkerns mit dem Preformling nach Fig. 4 in einer zweiten Herstellungsphase der Preform der Radfelge,
- Fig. 6: Ansicht des zweiteiligen Flechtkerns mit dem Preformling nach Fig. 4 in einer dritten Herstellungsphase der Preform der Radfelge,
- Fig. 7: Ansicht des zweiteiligen Flechtkerns mit dem Preformling nach Fig. 4 in einer vierten Herstellungsphase der Preform der Radfelge,
- Fig. 8: eine stilisierte Ansicht der fertiggestellten Preform der Radfelge.

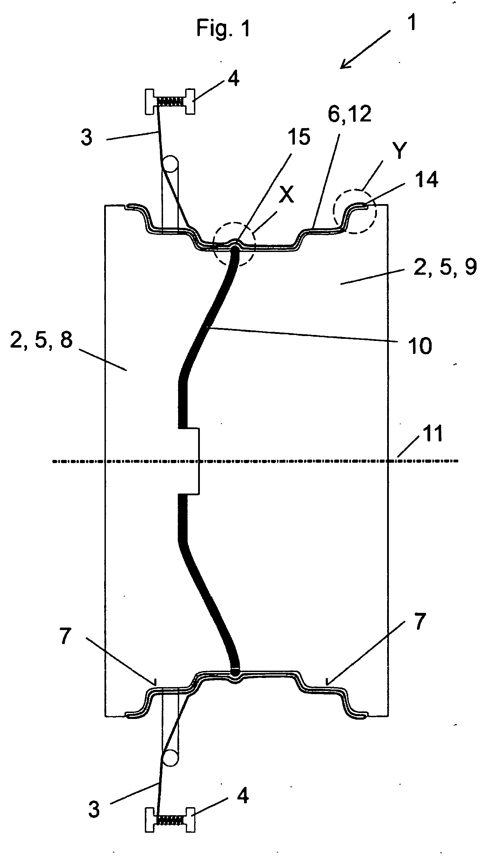

Fig. 1 zeigt einen Ausschnitt einer Rundflechtmaschine 1 mit einem Flechtkern 2. Der Flechtkern 2 wird mit Flechtfäden 3 beflochten, die über konzentrisch um den Flechtkern 3 umlaufende Flechtklöppel 4 abgespult werden. Als Flechtkern 3 dient ein Formwerkzeug 5 einer Preform 6 für die Herstellung einer Radfelge aus Faserverbundwerkstoff. Das Formwerkzeug 5 bildet an seinem Umfang die Kontur 7 eines Felgenbettes der Radfelge ab.

Der Flechtkern 2 besteht aus zwei Teilkernen 8, 9, zwischen denen ein Preformling 10 aus Fasermaterial für die Fertigung einer Radscheibe angeordnet ist. Der Preformling 10 besteht in diesem Ausführungsbeispiel aus einem strukturverstärkten TFP-Fasergelege (TFP-TAILORED FIBER PLACEMENT). Durch die Umlaufbewegung der Flechtklöppel 4 um eine Rotationssymmetrieachse 11 des Flechtkerns 2 und einer linearen, stetig wechselnden Hin- und Rückbewegungen des Flechtkernes 2 entlang der Rotationssymmetrieachse 11 wird das Formwerkzeug 5 gemeinsam mit dem Preformling 10 umflochten, wobei ein formschlüssig an der Umfangsfläche des Formwerkzeuges 5 und der Umfangsfläche des Preformlings 10 anliegendes Fasergeflecht 12 gebildet wird. Zusätzlich werden bei dem Umflechtvorgang nach dem Ausführungsbeispiel axial abgelegte Stehfäden in das Fasergeflecht 12 eingeflochten. Entsprechend der Anforderungen an die zu fertigende Radfelge können die Flechtfäden 3 und die Stehfäden teilweise aus Kohlenstofffasern, aus Glasfasern oder aus Metallfasern bestehen.

Durch die Hin- und Rückbewegung des Flechtkernes 2 wird ein entsprechender Richtungswechsel der Flechtrichtung-bewirkt, wobei bei einem stetigen Richtungswechsel zumindest an den beiden umlaufenden Rändern des Fasergeflechtes 12 jeweils eine gleichmäßige, umlaufende Wendezone 14 ausgebildet wird. Diese Wendezonen 14 bilden zugleich stabile Randzonen der Preform 6, die im Ausführungsbeispiel gleichzeitig die Randzonen der fertigzustellenden Radfelge ergeben.

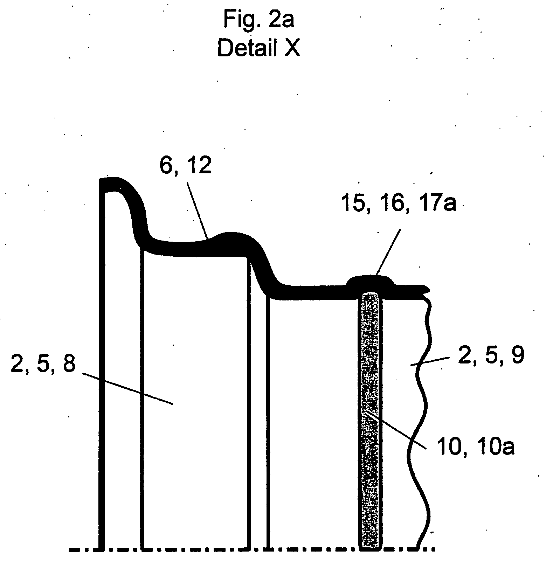

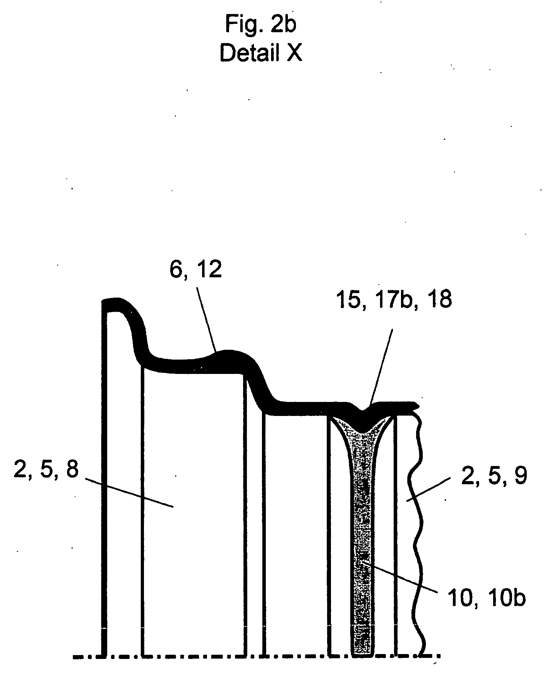

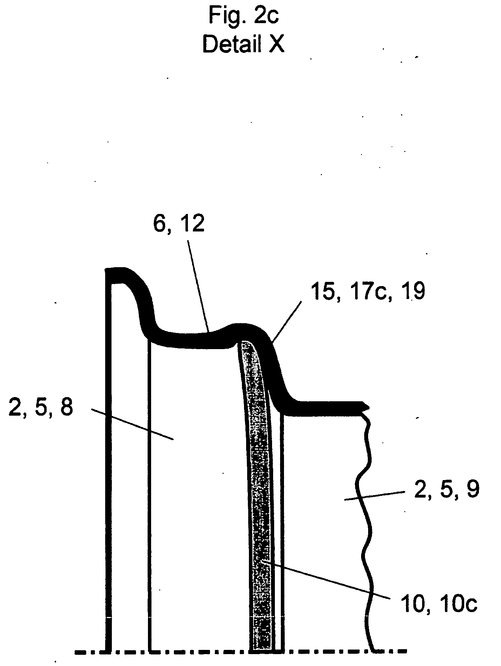

Das gestrichelt eingekreiste Detail X in Fig. 1 zeigt eine umlaufende Verbindungsstelle 15 des Fasergeflechtes 12 mit dem Preformling 10, die in Fig. 2a in einem vergrößerten Auszug des Flechtkerns 2 wiedergegeben ist. Die Fign. 2b und 2c zeigen alternative Anbindungsvarianten zur Verbindungsstelle 15 nach

Fig. 2a. Die Verbindungsstelle 15 in Fig. 2a wird durch einen Preformling 10a gebildet, dessen umlaufender Rand einen radialen, umlaufenden Überstand 16 über dem Flechtkern 2, respektive über dessen beide Teilkerne 8, 9 aufweist, so dass eine Hinterschnittverbindung 17a mit einer konvexen Ausformung des aufliegenden Fasergeflechtes 12 entlang der Kontur 7 des Felgenbettes entsteht. Fig. 2b zeigt einen Preformling 10b, dessen umlaufender Rand eine radiale, umlaufende Vertiefung 18 gegenüber dem Flechtkern 2, respektive über dessen beide Teilkerne 8, 9 aufweist, so dass eine Hinterschnittverbindung 17b mit einer konkaven Ausnehmung des aufliegenden Fasergeflechtes 12 entlang der Kontur 7 des Felgenbettes entsteht. Die Vertiefung 18 kann, wie in Fig. 2b gezeigt, beispielsweise durch Drapieren des umlaufenden Randes des Preformlings 10b erzeugt werden.

Fig. 2c zeigt einen Preformling 10c in Anbindung an einen radialen Übergang 19 der Kontur 7 des Felgenbettes zwischen einem Hochbett und einem Tiefbett. Hiermit ergibt sich eine Hinterschnittverbindung 17c mit seitlicher Anlage des aufliegenden Fasergeflechtes 12 an dem Preformling 10c.

Die einzelnen Formteile (aufgetragenes Fasergeflecht 12 und der Preformling 10 in seinen alternativen Ausprägungen 10a, 10b, 10c) bilden so die Preform 6 der Radfelge. Die Formteile werden während des Konsolidierungsprozesses in ihrem Kontaktbereich miteinander verschmolzen und verharzt und ergeben die fertiggestellte Radfelge. Die Hinterschnittverbindungen 17a, 17b, 17c vergrößern nicht nur den Formschluss sondern auch die für den Stoffschluss zur Verfügung gestellten Kontaktflächen zwischen dem Fasergeflecht 12 und dem Preformling 10a, 10b oder 10c. Dies ergibt eine hohe mechanische Beanspruchbarkeit der Gesamtstruktur der Preform 6 und der fertiggestellten Radfelge.

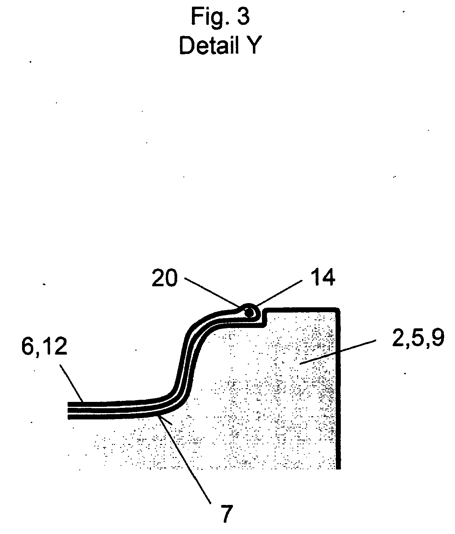

Aus Fig. 3 ist das Details Y aus Fig. 1 in einer vergrößerten Darstellung ersichtlich und zeigt eine Wendezone 14 des Fasergeflechtes 12 mit einem eingeflochtenen Fixierungselement 20, welches als Ring oder Roving aus Kunststoff oder Metall ausgebildet ist und zur zusätzlichen Stabilisierung des umlaufenden Randes der Preform 6 dient.

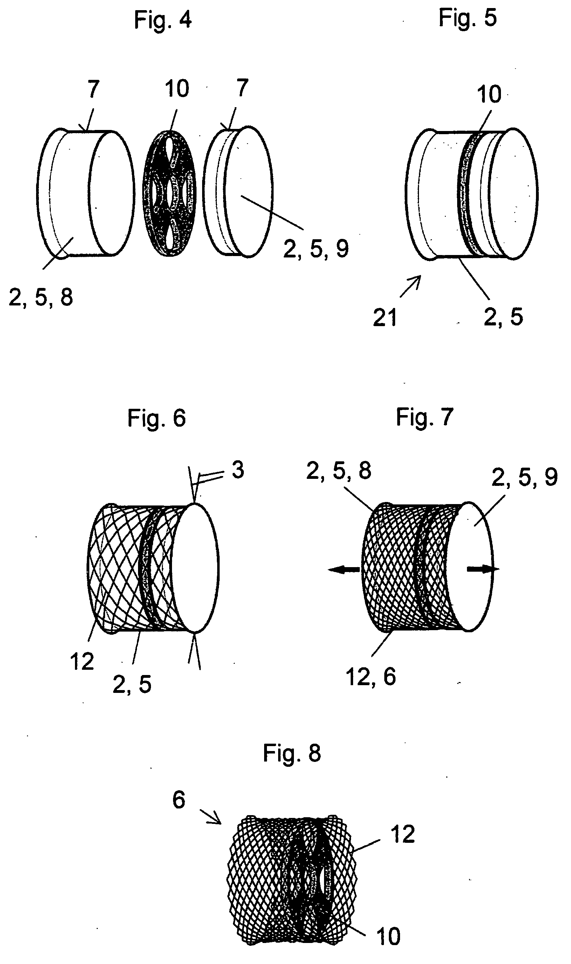

In den Figuren 4 bis 8 wird der Verlauf der erfindungsgemäßen Herstellung eine Radfelge in fünf Herstellungsphasen stilisiert dargestellt.

In einer ersten Herstellungsphase nach Fig. 4 werden die beiden Teilkerne 8, 9 des Flechtkerns 2, welche jeweils einen Teil der Kontur 7 des Felgenbettes der Radfelge abbilden, unter Zwischenlage des Preformlings 10 für die Radscheibe zusammengefügt.

Gemäß Fig. 5 wird eine Werkzeugeinheit 21, bestehend aus dem mit dem Preformling 10 komplettierten Formwerkzeug 5, als Flechtkern 2 für die Umflechtung in der Rundflechtmaschine 1 bereitgestellt.

In einer dritten Herstellungsphase nach Fig. 6 wird die Werkzeugeinheit 21 mehrfach mit Flechtfäden 3 umflochten und das Fasergeflecht 12 gebildet, welches gleichzeitig mit dem Preformling formschlüssig verbunden wird.

Fig. 7 zeigt die Herstellungsphase der Entformung der zusammengesetzten Preform 6 der Radfelge, bei der die beiden Teilkerne 8, 9 des Flechtkerns 2 seitwärts in der jeweils gezeigten Pfeilrichtung entfernt werden.

In Fig. 8 ist die entformte Preform 6 der Radfelge dargestellt, welche das geflochtene, entsprechend der Kontur 7 des Felgenbettes der Radfelge geformte Fasergeflecht 12 in Verbindung mit dem Preformling 10 der Radscheibe umfasst. Dieser Preform 6 bildet das Zwischenprodukt vor deren Konsolidierung auf dem Weg zur Fertigstellung der Radfelge. Dieser Vorgang der Konsolidierung kann alternativ auch vor der Entformung der Preform 6, also vor dem Entfernen der Teilkerne 8, 9 des Flechtkerns 2 in der Herstellungsphase nach Fig. 7 erfolgen.

Mit dem vorbeschriebenen erfindungsgemäßen Verfahren kann die Herstellung der Radfelge durchgängig maschinell erfolgen - insbesondere entfällt eine manuelle Anformung des Fasergeflechtes 12 an das Formwerkzeug 5 und ein manuelles Verbinden mit Bauelementen, wie der Radscheibe 10. Damit eignet es sich für eine industrielle Großserienfertigung von Radfelgen aus Faserverbundwerkstoff.

### Bezugszeichenliste

- 1: Rundflechtmaschine
- 2: Flechtkern
- 3: Flechtfäden
- 4: Flechtklöppel
- 5: Formwerkzeug
- 6: Preform, Preform der Radfelge
- 7: Kontur des Felgenbettes
- 8: Teilkern des Flechtkern
- 9: Teilkern des Flechtkern
- 10: Bauelement, Preformling der Radscheibe a, b, c
- 11: Rotationssymmetrieachse des Flechtkernes
- 12: Fasergeflecht
- 13:
- 14: Wendezone
- 15: Verbindungsstelle
- 16: umlaufender Überstand
- 17: Hinterschnittverbindung a, b, c
- 18: umlaufende Vertiefung
- 19: radialer Übergang der Kontur des Felgenbettes
- 20: Fixierungselement, Ring, Roving
- 21: Werkzeugeinheit

## Patentansprüche

1. Verfahren zur Herstellung von Radfelgen aus Faserverbundwerkstoffen, insbesondere zum Einsatz in der Kraftfahrzeugtechnik, bei dem eine Preform (6) der Radfelge durch Ablage eines Fasermaterials (12) auf einem die Kontur des Felgenbettes abbildenden Formwerkzeug (5) gebildet wird und die Preform (6) anschließend konsolidiert wird, **dadurch gekennzeichnet, dass** die Preform (6) der Radfelge durch maschinelle Umflechtung gebildet wird, bei der das Formwerkzeug (5) als Flechtkern (2) dient und gemeinsam mit dem Flechtkern (2) wenigstens ein Bauelement (10) der Radfelge derart mit Flechtfäden (3) umflochten wird, dass ein Fasergeflecht (12) entsteht, welches formschlüssig am Formwerkzeug (5) und an einer umlaufenden Kontur des Bauelementes (10) anliegt.

2. Verfahren nach Anspruch 1, **dadurch gekennzeichnet, dass** gemeinsam mit dem Flechtkern (2) eine Radscheibe (10) umflochten wird.

3. Verfahren nach Anspruch 1 oder 2, **dadurch gekennzeichnet, dass** Fixierungselemente (20) in das Fasergeflecht (12) eingeflochten werden, mittels derer die Lage des Fasergeflechtes (12) fixiert wird.

4. Verfahren nach Anspruch 1 bis 3, **dadurch gekennzeichnet, dass** die Fixierungselemente (20) im Bereich einer Wendezone (14) und/oder im Bereich eines Überganges (19) des Umfangs des Flechtkerns (2) und/oder im Bereich des/der vom Bauelement (10) gebildeten Überstandes (16) oder Vertiefung (18) in das Fasergeflecht (12) eingeflochten werden.

5. Verfahren nach einem der Ansprüche 1 bis 4, **dadurch gekennzeichnet, dass** während der Konsolidierung der Preform (6) ein am Bauelement (10) anliegender Abschnitt des Fasergeflechtes (12) mit dem Bauelemente (10) stoffschlüssig verbunden wird.

6. Verfahren nach einem der Ansprüche 1 bis 5, **dadurch gekennzeichnet, dass** das Bauelement (10) aus Faserverbundwerkstoff oder aus Metall besteht.

7. Verfahren nach Anspruch 6, **dadurch gekennzeichnet, dass** das Bauelement (10) ein Preformling aus Fasermaterial ist.

8. Verfahren nach einem der Ansprüche 1 bis 7, **dadurch gekennzeichnet, dass** der Flechtkern (2) mehrteilig ausgebildet ist.

9. Verfahren nach Anspruch 8, **dadurch gekennzeichnet, dass** das Bauelement (10) zwischen zwei die Kontur (7) des Felgenbettes der Radfelge abbildenden Teilkernen (8, 9) des Flechtkernes (2) angeordnet ist.

10. Verfahren nach einem der Ansprüche 1 bis 9, **dadurch gekennzeichnet, dass** das Bauelement (10) derart dimensioniert und dem Flechtkern beigeordnet ist, dass es im Verhältnis zum Umfang des Flechtkernes (2) einen radialen, vorzugsweise umlaufenden Überstand (16) über dem Flechtkern (2) und/oder eine radiale, vorzugsweise umlaufende Vertiefung (18) gegenüber dem Flechtkern (2) bildet.

11. Verfahren nach einem der Ansprüche 1 bis 10, **dadurch gekennzeichnet, dass** die Umflechtung mittels einer Rundflechtmaschine (1) erfolgt.

12. Verfahren nach einem der Ansprüche 1 bis 11, **dadurch gekennzeichnet, dass** das Fasergeflecht (12) durch eine stetig wiederkehrende Änderung der Flechtrichtung gebildet wird, vorzugsweise durch stetig wechselnde Seitwärtsbewegungen des Flechtkernes (2) gegenüber dem Fadenlauf der Flechtfäden (3).

13. Verfahren nach einem der Ansprüche 1 bis 12, **dadurch gekennzeichnet, dass** die Flechtdichte und/ oder der Flechtwinkel der Flechtfäden (3) lokal einstellbar ist.

14. Verfahren nach einem der Ansprüche 1 bis 13, **dadurch gekennzeichnet, dass** in das Fasergeflecht (12) Stehfäden integriert werden, die eine axiale Faserlage erzeugen.

15. Verfahren nach einem der Ansprüche 1 bis 14, **dadurch gekennzeichnet, dass** eine separate Faserlage oder ein textiles Halbzeug in das Fasergeflecht (12) integriert wird.

16. Verfahren nach einem der Ansprüche 1 bis 15, dadurch ge-. kennzeichnet, dass die Konsolidierung der Preform (6) und/oder des Preformlings (10) mittels einer Injektion, vorzugsweise mittels Harzinjektion, erfolgt.

17. Verfahren nach einem der Ansprüche 1 bis 16, **dadurch gekennzeichnet, dass** die Flechtfäden (3) wenigstens teilweise aus Kohlenstofffasern und/oder aus Glasfasern und/oder aus Metallfasern bestehen.

## Claims

1. Method for producing wheel rims made of fibre compound materials, in particular for use in automotive engineering, in which a preform (6) of the wheel rim is formed by depositing fibre material (12) into a mould (5) in the shape of the rim base and then consolidating the preform (6), **characterised in that** the preform (6) of the wheel rim is formed by mechanical braiding, in which the mould (5) serves as a braided core (2) and alongside the braided core (2) at least one component (10) of the wheel rim is braided with braiding threads (3) in such a way that a fibre network (12) is formed which is flush with the mould (5) and the circumferential outline of the component (10) in a form-fitting manner.

2. Method according to claim 1, **characterised in that** a wheel disc (10) is braided together with the braided core (2).

3. Method according to claim 1 or 2, **characterised in that** fixing elements (20) are woven into the fibre network (12), through which the placement of the fibre network (12) is fixed.

4. Method according to claims 1 to 3, **characterised in that** the fixing elements (20) are woven into the region of a turning zone (14) and/or into the region of a shift (19) in the circumference of the braided core (2) and/or into the region of the protrusion (16) or recess (18) formed by the component (10) in the fibre network (12).

5. Method according to one of claims 1 to 4, **characterised in that** during consolidation of the preform (6) a section of the fibre network (12) flush with the component (10) is bound with the component (10) in a bonded manner.

6. Method according to one of claims 1 to 5, **characterised in that** the component (10) is composed of fibre compound materials or metal.

7. Method according to claim 6, **characterised in that** the component (10) is a preformed part made of a fibre material.

8. Method according to one of claims 1 to 7, **characterised in that** the braided core (2) is composed of several parts.

9. Method according to claim 8, **characterised in that** the component (10) is arranged between the two partial cores (8, 9) of the braided core (2) forming the outline (7) of the rim base of the wheel rim.

10. Method according to one of claims 1 to 9, **characterised in that** the component (10) is dimensioned and adjunct to the braided core in such a way that it forms, in relation to the circumference of the braided core (2), a radial, preferably circumferential protrusion (16) above the braided core (2) and/or a radial, preferably circumferential recess (18) with respect to the braided core (2).

11. Method according to one of claims 1 to 10, **characterised in that** the braiding takes place by way of a circular braiding machine (1).

12. Method according to one of claims 1 to 11, **characterised in that** the fibre network (12) is formed through a constant alteration of the braid direction, preferably through constantly changing lateral movements of the braided core (2) with respect to the weave of the braiding threads (3).

13. Method according to one of claims 1 to 12, **characterised in that** the density of the braid and/or the braid angle of the braiding threads (3) can be adjusted locally.

14. Method according to one of claims 1 to 13, **characterised in that** filler threads are integrated into the fibre network (12) which generate an axial fibre layer.

15. Method according to one of claims 1 to 14, **characterised in that** a separate fibre layer or a textile semi-finished product is integrated into the fibre network (12).

16. Method according to one of claims 1 to 15, **characterised in that** the consolidation of the preform (6) and/or the preformed parts (10) takes place by way of an injection, preferably a resin injection.

17. Method according to one of claims 1 to 16, **characterised in that** the braiding threads (3) are composed at least partially of carbon fibres and/or glass fibres and/or metal fibres.

## Revendications

1. Procédé de fabrication de jantes de roues en matériaux renforcés par des fibres, en particulier pour une utilisation dans le secteur automobile, selon lequel une préforme (6) de la jante de roue est créée par le dépôt d'un matériau fibreux (12) sur un outil de formage (5) correspondant au contour de l'embase de jante, après quoi la préforme (6) est consolidée, **caractérisé en ce que** la préforme (6) de la jante de roue est réalisée par tressage mécanique, l'outil de formage (5) servant d'âme (2) et cette âme (2) étant tressée avec au moins un composant (10) de la jante de roue à l'aide de fils de tressage (3) de manière à former une tresse de fibres (12) disposée mécaniquement sur l'outil de formage (5) et sur le contour du composant (10).

2. Procédé selon la revendication 1, **caractérisé en ce qu'**un disque de roue (10) est tressé avec l'âme de la tresse (2).

3. Procédé selon la revendication 1 ou 2, **caractérisé en ce que** les éléments de fixation (20) sont intégrés dans la tresse de fibres (12) afin de fixer la tresse de fibres (12) en position.

4. Procédé selon les revendications 1 à 3, **caractérisé en ce que** les éléments de fixation (20) sont intégrés dans la tresse de fibres (12) au niveau de la zone de retournement (14) et/ou au niveau de la zone de passage (19) de l'âme de la tresse (2) et/ou au niveau de la saillie (16) ou de la cavité (18) formée par le composant (10).

5. Procédé selon l'une des revendications 1 à 4, **caractérisé en ce que**, au cours de la consolidation de la préforme (6), une section de la tresse de fibres (12) posée sur le composant (10) est liée par adhérence à ce composant (10).

6. Procédé selon l'une des revendications 1 à 5, **caractérisé en ce que** le composant (10) est réalisé en matériau renforcé par des fibres ou en métal.

7. Procédé selon la revendication 6, **caractérisé en ce que** le composant (10) est une pièce brute préformée en matériau fibreux.

8. Procédé selon l'une des revendications 1 à 7, **caractérisé en ce que** l'âme de la tresse (2) se compose de plusieurs parties.

9. Procédé selon la revendication 8, **caractérisé en ce que** le composant (10) est disposé entre deux des âmes partielles (8, 9) de la tresse (2) constituant le contour (7) de l'embase de la jante de roue.

10. Procédé selon l'une des revendications 1 à 9, **caractérisé en ce que** le composant (10) est dimensionné et adjoint à l'âme de la tresse de manière à constituer, par rapport à l'âme de la tresse (2), une saillie radiale de préférence circulaire (16) sur l'âme de la tresse (2) et/ou une cavité radiale de préférence circulaire (18) par rapport à l'âme de la tresse (2).

11. Procédé selon l'une des revendications 1 à 10, **caractérisé en ce que** le tressage est effectué à l'aide d'une tresseuse circulaire (1).

12. Procédé selon l'une des revendications 1 à 11, **caractérisé en ce que** la tresse de fibres (12) est réalisée par modification itérative constante du sens de tressage, de préférence par le biais de mouvements latéraux sans cesse changeants de l'âme de la tresse (2) par rapport au mouvement des fils de tressage (3).

13. Procédé selon l'une des revendications 1 à 12, **caractérisé en ce que** la densité et/ou l'angle des fils de tressage (3) sont réglables localement.

14. Procédé selon l'une des revendications 1 à 13, **caractérisé en ce que** des fils fixes sont intégrés dans la tresse de fibres (12) pour créer une couche de fibres axiale.

15. Procédé selon l'une des revendications 1 à 14, **caractérisée en ce qu'**une couche de fibres distincte ou une demi-pâte textile est intégrée dans la tresse de fibres (12).

16. Procédé selon l'une des revendications 1 à 15, **caractérisée en ce que** la consolidation de la préforme (6) et/ou la pièce brute préformée (10) est réalisée au moyen d'une injection, de préférence de résine.

17. Procédé selon l'une des revendications 1 à 16, **caractérisée en ce que** les fils de tressage (3) sont, au moins en partie, composés de fibres de carbone et/ou de fibres de verre et/ou de fibres métalliques.
